# FASCICULE DE BREVET EUROPEEN

(11) **EP 2 590 772 B1**
(45) Date de publication et mention de la délivrance du brevet: **30.05.2018**
(21) Numéro de dépôt: 11743286.4
(22) Date de dépôt: 04.07.2011
(51) Int. Cl.: B23K 9/02, B23K 9/028, B23K 9/08, B23K 35/38

(54) **SOUDAGE MIG/MAG DE L'ACIER AU CARBONE AVEC ARC ROTATIF ET MÉLANGE GAZEUX AR/HE/O2**
MIG/MAG-SCHWEISSEN MIT EINEM DREHENDEN LICHTBOGEN FÜR C-STAHL UND AR/HE/O2 GASMISCHUNG
MIG/MAG WELDING WITH ROTATIVE ARC FOR CARBON STEEL AND AR/HE/O2 GAS MIXTURE

(30) Priorité: 07.07.2010 FR 1055493
(43) Date de publication de la demande: 15.05.2013
(73) Titulaire: L'Air Liquide Société Anonyme pour l'Etude et l'Exploitation des Procédés Georges Claude, 75007 Paris (FR)
(72) Inventeur: BISKUP, Laurent, F-60590 Serifontaine (FR); BOUDET, Gilles, F-78570 Andresy (FR); PLANCKAERT, Jean-Pierre, F-60240 Monneville (FR); SAEZ, Michel, F-60260 Lamorlaye (FR)
(74) Mandataire: Pittis, Olivier
(86) Numéro de dépôt international: PCT/FR2011/051560
(87) Numéro de publication internationale: WO 2012/004498

(56) Documents cités:
- EP-A1- 1 707 296
- EP-A1- 2 042 256
- EP-A2- 2 078 580
- AU-B2- 461 775
- DE-A1-102007 013 802
- DE-C1- 4 429 228
- DE-C1- 19 704 513

## Description

L'invention porte sur l'utilisation d'un mélange gazeux ternaire formé d'argon, d'hélium et d'oxygène en tant que gaz de protection dans un procédé de soudage à l'arc avec arc rotatif de type MIG/MAG, avec apport de fil fusible, de pièces en acier au carbone, en configuration de type en chevauchement, notamment d'assemblages de type à bords soyés.

Les assemblages de pièces métalliques en configuration de type chevauchant (désignés par les termes *lap joint* en anglais) se retrouvent notamment dans les éléments constitutifs d'appareils sous pression de type ballon d'eau chaude, extincteur, compresseur, appareil réfrigérant, bouteille de gaz de type GPL...

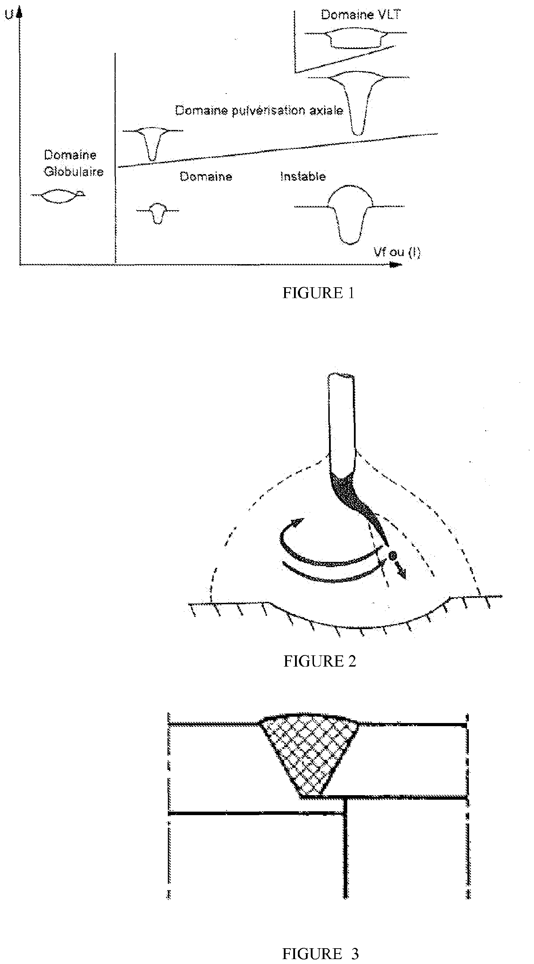

En particulier, les plus utilisés sont ceux dit à bords soyés, communément appelés assemblages à bords soyés. Comme illustré en Figure 3, un tel assemblage comprend en général deux pièces à creuses extrémités cylindriques dont l'une est emboîtée dans l'autre de manière à ce que la surface interne de l'une des pièces vienne chevaucher, sur plusieurs millimètres, la surface externe de l'autre pièce au niveau de leurs extrémités circulaires.

La norme EN 13445-4:2002 définit précisément les tolérances de fabrication concernant l'alignement des fibres neutres, l'alignement des surfaces, les écarts de circularité, les écarts de rectitude, les irrégularités de profil et les amincissements locaux de tels assemblages chevauchant, en particulier à bords soyés.

Schématiquement, la soudure obtenue sur ce type d'assemblage, c'est-à-dire avec bords qui se recouvrent ou se chevauchent partiellement, comme illustré notamment en Figure 3, doit présenter un profil assez large pour bien recouvrir l'extérieur du joint et avoir une pénétration suffisante pour fondre l'arrête inférieure du bord supérieur.

Par ailleurs, en fonction du procédé de soudage mis en oeuvre, après chaque passe, le laitier qui s'est formé pendant la passe précédente doit être éliminé, la surface nettoyée et les défauts de surface enlevés pour obtenir la qualité de soudure souhaitée.

Le document EP-A-2078580 a proposé de souder des assemblages à bords soyés par procédé de soudage MIG/MAG avec arc rotatif et en utilisant un mélange gazeux constitué de 8 à 12 % d'hélium, de 2,5 à 3,5 % d'oxygène et d'argon pour le reste (% en volume).

Toutefois, ce procédé présente les inconvénients de conduire à une constriction d'arc insuffisante et il s'ensuit des soudures dont le profil de pénétration n'est pas toujours celui recherché.

Dans les applications visées, l'utilisateur va rechercher un transfert avec un minimum de projection. Or, le mélange proposé dans le document EP-A-2078580 impose d'employer une tension plus élevée pour s'affranchir à 100% des courts-circuits extrêmement brefs mais intenses.

Par ailleurs, le document EP-A-857534 enseigne d'utiliser des mélanges gazeux constitués de 10 à 40% d'hélium, de 1 à 8% d'oxygène et d'argon pour le reste pour souder les aciers ferromagnétiques. Avantageusement, la teneur en oxygène préconisée doit être d'au moins 5% pour obtenir un soudage efficace dans le cas d'un soudage à l'arc rotatif. Toutefois, dans ce cas, les assemblages sont tous en configuration classique, c'est-à-dire bout à bout jointifs. Ce document n'enseigne rien sur les assemblages chevauchant, ni sur la qualité de soudure obtenue sur de tels assemblages.

Or, les assemblages type chevauchant sont délicats à souder et posent des problèmes spécifiques car si l'énergie de soudage est trop importante, on assiste à des projections importantes de métal en fusion, ce qui nuit à la qualité de réalisation, voire même à des perçages des pièces soudées si leur épaisseur est faible, c'est-à-dire inférieure à 1 mm environ.

De plus, la soudure ou joint de soudure réalisé sur ce type d'assemblages doit être de grande qualité non seulement en terme de pénétration pour permettre une bonne solidarisation entre elles des pièces se chevauchant mais aussi en terme de morphologie de cordon, en particulier de mouillage, pour que le cordon obtenu ne soit pas trop bombé ou à l'inverse ne présente pas de caniveau.

Or, obtenir un bel aspect de cordon nécessite n'est pas chose aisée au plan industriel.

Partant de là, un problème qui se pose est de proposer un procédé de soudage à l'arc rotatif amélioré permettant de souder efficacement des assemblages chevauchant en acier de manière à obtenir une bonne pénétration et une bonne qualité de soudage, notamment une bonne morphologie de cordon de soudure, en particulier en terme de mouillage, avec aucune ou alors un nombre aussi réduit que possible de projections lors du soudage, et ce, avec mise en oeuvre d'une faible énergie de soudage, typiquement un courant de soudage inférieur à 300 A avec une tension de soudage de moins de 35 V.
- La solution selon l'invention est un procédé de soudage à l'arc électrique selon la revendication 1.

Selon l'invention - les pièces soudées sont en acier au carbone. On appelle « acier carbone », un alliage fer-carbone avec une concentration de carbone inférieure à 2% en masse. Un tel alliage peut contenir des éléments d'addition de type Mn, Cr, Si, Mo, Ti, Ni et Nb. Des impuretés peuvent être présentes dans l'analyse chimique du métal, tel que S, P, O, N.

Selon le cas, le procédé de soudage de l'invention peut comprendre l'une ou plusieurs des caractéristiques suivantes :
- les pièces soudées sont en configuration de type à bords soyés, de préférence les pièces soudées sont des éléments constitutifs d'un appareil sous pression de type ballon d'eau chaude, extincteur, compresseur, appareil réfrigérant ou bouteille de gaz.
- les pièces soudées comprennent des extrémités cylindriques se chevauchant l'une l'autre.
- on met en oeuvre une tension d'arc comprise entre 29.5V et 35 V, de préférence moins de 34V.
- on soude une ou des pièces ayant une épaisseur inférieure ou égale à 3 mm, de préférence inférieure ou égale à 2 mm.
- le fil a un diamètre de 0.8 à 1 mm.
- la tension de soudage est de moins de 36 V, typiquement comprise entre 29.5 V et 35 V environ.
- l'intensité de soudage est comprise entre 245 A et 300 A
- le fil de soudage est de type NERTALIC 70 S.
- la vitesse de dévidage du fil (Vfil) est d'au plus 30 m/min, typiquement comprise entre 16 m/min et 20 m/min.
- la vitesse de soudage est d'au plus 5 m/min, typiquement comprise entre 0.8 m/min et 2 m/min.

La présente invention va être expliquée plus en détail dans la description suivante faite en référence aux figures annexées parmi lesquelles :
- La Figure 1 schématise l'influence du type de transfert sur la morphologie du cordon,
- la Figure 2 schématise une veine liquide tournante, et
- la Figure 3 schématise un assemblage à bords soyés.

D'une manière générale, en soudage à l'arc MIG-MAG, il existe trois régimes de transfert principaux ou conventionnels, à savoir :
- le court-circuit. Ce régime est obtenu pour de faibles énergies d'arc, typiquement de 50 à 200 A et de 15 à 20 V. Une goutte de métal fondu se forme au bout du fil d'apport et grossit progressivement jusqu'à venir en contact avec le bain de métal en fusion, ce qui provoque un court-circuit. Le courant augmente alors rapidement faisant apparaître un pincement qui facilite le détachement de la goutte, puis l'arc se réamorce. Ce phénomène se répète à des fréquences de 50 à 200 Hz environ. Ce régime est dit "froid" et présente un arc court. Il est adapté au soudage des fines épaisseurs, à savoir moins de 3 mm, et permet de maîtriser le bain de fusion lors du soudage en position.
- la pulvérisation axiale. Pour les hautes énergies de soudage, c'est-à-dire d'au moins 28 V pour 280 A, et au-delà d'une certaine densité de courant, typiquement supérieure à 250 A/mm² selon la nature du fil et le gaz de protection, l'extrémité du fil d'apport prend une forme de cône allongé. Le transfert du métal fondu depuis le fil vers le bain de soudure se produit sous forme de fines gouttelettes de métal fondu dont le diamètre est inférieur à celui du fil et qui sont projetées à grande vitesse dans l'axe du fil. L'arc est long de 4 à 6 mm. Ce transfert de métal procure un arc stable et peu de projections. Il autorise de fortes pénétrations à savoir d'au moins 5 mm, et des volumes de métal déposé importants, c'est-à-dire au moins 15 m/min de vitesse fil. Il est adapté au soudage de pièces ayant des épaisseurs de l'ordre de 5 mm et plus. Toutefois, le volume et la fluidité du bain font qu'il est principalement utilisé en soudage à plat.
- le régime globulaire. Pour des énergies de soudage comprises entre celles donnant les transferts par court-circuit et par pulvérisation axiale, c'est-à-dire typiquement entre 22 V pour 200 A et 28 V pour 280 A, les gouttes de métal se formant à l'extrémité du fil d'apport ont une croissance lente. L'intensité du courant n'étant pas suffisante pour avoir un effet de pincement provoquant le détachement, la goutte devient grosse, c'est-à-dire de taille supérieure au diamètre du fil considéré. Le transfert se fait soit par court-circuit, quand la goutte touche le bain, soit par détachement de la goutte sous l'effet de la pesanteur. La goutte suit alors une trajectoire qui n'est pas toujours dans l'axe de l'arc. Ce mode de transfert est instable, ne permet d'atteindre que de faibles pénétrations de soudage et engendre de nombreuses projections de gouttelettes métalliques.

A ces trois régimes principaux, il faut ajouter trois régimes de transfert qui nécessitent des paramètres de soudage non conventionnels, à savoir :
- le régime arc court ou « *short arc* » forcé. Le transfert par court-circuit ne permet pas de souder à courant élevé, alors qu'une augmentation de l'intensité de soudage entraîne un transfert globulaire engendrant d'importantes projections adhérentes et un temps de parachèvement aussi important. Le transfert par court-circuit forcé ou arc-court forcé permet, avec une énergie d'arc normalement située dans le domaine globulaire, de maintenir un transfert par court-circuit. Ce régime permet d'accroître les vitesses de soudage et n'engendre que de fines projections limitant le temps de parachèvement. Le court-circuit forcé s'obtient avec des postes de soudage transistorisés dont les formes d'ondes permettent de maintenir un court-circuit régulier.
- le régime pulsé. A l'origine, le régime pulsé a été mis au point pour pallier aux inconvénients du régime globulaire qui de par son mode de transfert instable et son caractère projetant, ne permettait pas d'augmenter la productivité dans des conditions de soudage acceptables. En régime pulsé, on soude en courant pulsé en choisissant les paramètres de pulsation de telle sorte qu'il y ait, pour chacun des pulses, un transfert de type pulvérisation axiale avec une seule goutte par pulse. Le régime est ici forcé, c'est à dire que l'on impose la forme du courant en choisissant soigneusement les paramètres de la pulsation afin que le résultat soit probant. Typiquement, les fréquences de pulsation vont de 50 à 300 Hz suivant la vitesse d'avance du fil. Cela nécessite des générateurs, à transistors par exemple, pour lesquels on peut imposer la forme du courant en fonction du temps.
- le transfert par veine liquide tournante (ou VLT). Aux très fortes énergies de soudage, c'est-à-dire environ 40 V pour 450 A, le transfert par pulvérisation axiale est soumis à des forces électromagnétiques importantes. Sous l'effet de ces forces, le métal liquide en transfert se met à tourner formant une veine liquide rotative. Donnant une productivité élevée, ce régime apparaît à des intensités de l'ordre de 500 A et des tensions de 45 à 50 V. La forme de pénétration arrondie est propice au remplissage de chanfrein et permet une bonne compacité.

Or, d'une façon générale, le transfert dépend de la vitesse de fil et de la tension. Si la vitesse de fil est suffisamment élevée, le transfert évolue d'instable à pulvérisation axiale, puis vers une veine liquide tournante, en augmentant la tension. La forme du cordon résulte alors du transfert appliqué.

Les morphologies de cordons obtenus avec les différents modes de transferts susmentionnés sont illustrées en Figure 1. Comme on peut le voir sur la Figure 1, chaque transfert conduit à une forme de cordon particulière.

Ainsi :
- le régime globulaire se traduit par une pénétration lenticulaire avec présence de grosses projections adhérentes.
- le régime instable est caractérisé par un cordon bombé, non mouillé, avec une pénétration légèrement pointue pour les vitesses de fil basses. La forme pointue s'accentue avec l'élévation de la vitesse fil.
- le régime pulsé permet d'avoir des types de morphologies de cordon variés grâce à la grande amplitude de réglages qu'offrent ses formes d'onde. Aux hautes vitesses-fil l'obligation d'augmenter fortement la fréquence des pulses de courant ainsi que l'intensité pic conduit à un comportement très proche du spray. Ce transfert se traduit au niveau du cordon par une géométrie très proche de celle que procure un transfert spray en courant lisse.
- le régime par pulvérisation axiale conduit à une pénétration en forme de doigt de gant d'autant plus prononcée que la vitesse fil est élevée. Le mouillage est bon.
- la veine liquide tournante ou VLT engendre des pénétrations de cordon à fond plat en forme de cuvette.

Dans le cadre de la présente invention, le mode de transfert choisi est le transfert de type veine liquide tournante ou VLT.

Or, classiquement, en transfert VLT, pour les énergies de soudage très élevées, c'est-à-dire d'au moins 40 V pour 450 A, et sous l'effet des forces électromagnétiques en présence, on observe la formation d'une veine liquide présentant un mouvement de rotation. Ce régime VLT nécessite donc généralement la mise en oeuvre d'un couple tension-courant élevé, i.e. supérieure à 40 V et 450 A, délivrée par un (ou plusieurs) générateur de puissance dont l'enveloppe de puissance couvre cette plage d'énergie, étant donné que couramment on trouve des générateurs qui ne délivrent pas plus de 400 A, et d'une vitesse de fil comprise entre 20 et 40 m/mn en fonction du diamètre de fi d'apport utilisé, lequel fil doit en outre avoir toujours une partie terminale libre d'au moins 25 mm. Pour ce faire, on utilise habituellement un dévidoir à double vitesse, à savoir des vitesses pouvant atteindre 50 m/mn, qui permet, dans un premier régime à vitesse de fil conventionnelle, d'assurer le bon déroulement des phases de démarrage et d'arrêt, et dans un second régime, d'autoriser le passage au régime haut taux de dépôt qui nécessite des vitesses de fil élevées.

Par ailleurs, la buse de soudage délivrant le fil et la protection gazeuse doit être particulièrement bien refroidie par circulation d'eau.

Enfin, la protection gazeuse appliquée lors d'un soudage MI/MAG en régime VLT, est particulièrement importante car elle conditionne l'obtention de cordons de soudage de plus ou moins bonne qualité. Ainsi, le document EP-A-2078580 a proposé un mélange préférentiel He/Ar/O₂ contenant de 9 % à 11% d'hélium, de 2.7% à 3.3% d'oxygène et le reste en argon. Or, en pratique, il s'est avéré que ce mélange ternaire n'était pas idéal car le faible taux d'hélium peine à créer une constriction d'arc suffisante pour augmenter la densité de courant et donc l'amplitude des forces électromagnétiques. De plus, l'observation d'enregistrements à l'oscilloscope avec échantillonnage très rapide, a montré l'existence de micro courts-circuits en bas de la zone veine liquide tournante sur le diagramme de la Figure 1. Il s'agit en fait de points de fonctionnement où la tension n'est pas suffisamment élevée pour éviter que la veine liquide ne vienne établir un contact physique avec le bain de soudage et donc provoquer une extinction de l'arc suivie d'un réamorçage accompagné de projections.

Au vu de cela, les inventeurs de la présente invention ont cherché à mieux comprendre l'intérêt et l'influence de différents gaz entrant dans la composition de mélange gazeux servant de gaz de protection de manière à tenter d'améliorer le procédé de soudage MIG/MAG de pièces en acier avec transfert par veine liquide tournante mais à niveau d'énergie bas, c'est-à-dire moins de 320A et de 32 V.

Ils se sont tout particulièrement intéressés à l'hélium et à l'oxygène, mais aussi à l'argon, et ont réalisé les essais comparatifs consignés ci-après.

En fait, dans un tel mélange gazeux, l'hélium est employé pour sa plus grande conductivité thermique. En effet, on peut considérer que pour toute position le long de l'axe entre le fil et la pièce à souder, une grande partie de l'énergie électrique apportée par la source est contenue dans l'enthalpie du plasma étant donné qu'une partie du gaz de protection est ionisée pour former l'arc électrique, à savoir : *IV* ≈ *ρ_{A}h_{A}v_{A}A*
où :
- I est le courant de soudage,
- V est la différence de potentiel entre l'électrode et la projection suivant l'axe du fil sur la pièce à souder,
- ρ_{A} est la densité moyenne du plasma,
- v_{A} est la vitesse moyenne du plasma et
- A est la surface de l'arc.

La densité de flux d'énergie est alors donnée par *ρ_{A}h_{A}v_{A}*, donc une caractéristique matérielle essentielle du plasma est le produit ph ou ρcₚ puisque : cₚ = dh/dT.

D'après l'équation ci-dessus, pour les mêmes valeurs de I et de V, une augmentation de la valeur de cₚ et donc de l'enthalpie h résulte en une surface d'arc A réduite et donc en un arc constricté.

Un deuxième effet est que la surface réduite de l'arc produit une densité de courant plus élevé et donc des forces magnétiques plus importantes.

On peut également noter qu'une plus grande vitesse v_{A} produit une plus petite valeur de A et un arc constricté. Cet effet est appelé l'effet « pinch » thermique.

Par ailleurs, l'oxygène est utilisé pour son effet stabilisant sur l'arc mais aussi pour l'aspect tensio-actif qui va permettre d'obtenir une veine liquide à l'extrémité du fil consommable qui présentera une plus grande fluidité et qui sera plus facilement mise en mouvement par les forces magnétiques.

Enfin, le rôle de l'argon est quant à lui de faciliter l'amorçage de l'arc puisqu'il s'ionise facilement.

En définitive, l'objectif visé était de réussir à obtenir, pendant le soudage MIG/MAG de pièces en acier se chevauchant, typiquement une configuration en bords soyés, un transfert VLT identique ou similaire à celui schématisé en Figure 2, à niveau d'énergie bas.

Pour ce faire, ont été testés :
- différentes compositions gazeuses, en particulier des mélanges ternaires Ar/He/O2 contenant :
   - soit de 10 à 40 % He avec teneur en O₂ constante (3%), et reste Ar,
   - soit de 2 à 6 % O₂ avec teneur en He constante (10%), et reste Ar,
   - soit d'autres mélanges comparatifs avec 20% d'He.
- différentes vitesses de fil, et
- différents paramètres électriques, notamment différentes tension.

Pour chaque cordon soudé, une vidéo rapide synchronisée avec l'enregistrement des paramètres électriques de soudage et des macrographies a été réalisée de manière à pouvoir observer la manière dont s'effectue le transfert et l'apparition de micro courts-circuits en bas de la zone veine liquide tournante (cf. Figure 1). Il s'agit de points de fonctionnement où la tension n'est pas suffisamment élevée pour éviter que la veine liquide ne vienne établir un contact physique avec le bain de soudage et donc provoquer une extinction de l'arc suivie d'un réamorçage accompagné de projections.

En effet, pouvoir éviter un contact physique entre la veine et le bain de soudage est primordial pour pouvoir éviter ou diminuer les projections, donc augmenter la qualité de soudage.

Les paramètres de soudage qui ont été employés pour les essais sont répertoriés dans le Tableau 1.

**Tableau 1 : Paramètres de soudage**

| Nuance métal de base (acier) | Epaisseur soudée (mm) | Nuance fil | Diamètre fil (mm) | Vitesse dévidage du fil (Vfil) (m/min) | Tension U (V) | Intensité I (A) | Vitesse de soudage Vs (cm/min) |
|---|---|---|---|---|---|---|---|
| A42 | 6 | 70S | 1 | 16 à 20 | 29 à 35 | 245 à 295 | 77 |

| | | | | | | | |
|---|---|---|---|---|---|---|---|
| Acier A42 = Acier P265 selon la norme EN 10028-2. Nuance de fil : Nertalc 70S, selon la norme AWS A 5-18 : ER 70S-3 et selon la norme EN440 : G2 Si. | | | | | | | |

Les compositions des différents mélanges gazeux testés sont consignées dans le Tableau 2.

Durant le soudage, les pièces soudées sont en configuration bords soyés comme illustré en Figure 3.

Par ailleurs, le générateur utilisé est de type Digi@wave 500 de Air Liquide Welding France ; le dévidoir est de type DVR 500 ; et la torche est de type PROMIG 441 W.

**Tableau 2 : Compositions des mélanges gazeux testés**

| Essai n° | Teneur en O2 (% en vol.) | Teneur en He (% en vol.) | Teneur en Ar (% en vol.) |
|---|---|---|---|
| 1 | 3 | 10 | Reste (complément à 100% vol.) |
| 2 | 3 | 20 | |
| 3 | 3 | 30 | |
| 4 | 3 | 40 | |
| 5 | 6 | 10 | |
| 6 | 4,5 | 10 | |
| 7 | 2 | 10 | |
| 8 | 2 | 20 | |

Les résultats obtenus ont permis de mettre en évidence l'influence de l'oxygène et de l'hélium en soudage MIG/MAG avec arc tournant (VLT).

Plus précisément, les essais 7 et 8 ont montré que, pour une teneur en O₂ de 2%, l'énergie de soudage requise pour obtenir un transfert de métal exempt de micro court-circuit est située à 32.8 V pour 280 A. La faible teneur en O₂ du gaz de protection accroît moins la fluidité du métal fondu et donc le rend moins susceptible de tourner.

Lorsque la teneur en O₂ atteint 3% (essais 1 à 4), l'énergie de soudage requise pour obtenir un transfert de métal exempt de micro court-circuit est située à 31.8 V pour 275 A, alors que pour 4,5% (essai 6), elle est située à 32.8 V pour 279 A. L'augmentation de teneur en O₂ du gaz de protection accroît la fluidité du métal fondu et donc la veine liquide s'allonge. Ce « fil » ou veine de métal liquide plus long vient donc toucher de façon aléatoire le bain de soudage et créer des courts-circuits qui provoquent des projections adhérentes. Il est donc nettement préférable d'utiliser une teneur en oxygène de l'ordre de 3% qu'une teneur inférieure, c'est-à-dire de 2% seulement.

Pour une teneur de 6 % en O₂ (essai 5), l'énergie de soudage requise pour obtenir un transfert de métal exempt de micro court-circuit est située à 34.4 V pour 283 A. La forte teneur en O₂ du gaz de protection accroît encore davantage la fluidité du métal fondu et donc la veine liquide s'allonge encore. Les courts-circuits sont plus fréquents et donc les projections sont plus nombreuses. En outre, le cordon présente une oxydation très marquée et on note la présence de silicates volumineux en surface du cordon, qui seraient rédhibitoires au plan qualité et d'aspect de cordon. Cette teneur de 6% en oxygène est dès lors excessive.

Des essais complémentaires opérés avec des teneurs en oxygène supérieures à 3% mais inférieures à 6%, ont permis de constater que les teneurs en oxygène supérieures à environ 3% n'étaient pas nécessaires pour obtenir un bon mouillage et qu'au contraire, celles supérieure à 4,5 ou 5% pouvaient nuire à la qualité du cordon.

Au final, la teneur en oxygène doit donc impérativement être maintenue à environ 3% en volume.

Par ailleurs, des essais complémentaires ont montré que, lorsque le gaz contient 10% d'hélium (essais 1 et 5-7), l'énergie de soudage requise pour obtenir un transfert de métal exempt de micro court-circuit est située à 31.8 V pour 275 A.

Le faible taux d'hélium peine à créer une constriction d'arc suffisante pour augmenter la densité de courant et donc l'amplitude des forces électromagnétiques. Le transfert de métal s'effectue bien suivant le transfert par veine liquide tournante mais les macrographies montrent une pénétration dont le profil ne respecte pas la définition du transfert VLT.

Augmenter la teneur en hélium à 20% en volume (essais 2 et 8) conduit à une énergie de soudage requise pour obtenir un transfert de métal exempt de micro court-circuit est située à 31.8 V pour 280 A. Le transfert de métal s'effectue bien suivant le transfert par veine liquide tournante et les macrographies montrent une pénétration dont le profil respecte la définition du transfert VLT.

Par contre, à plus de 20% d'hélium, notamment à 30% d'hélium (essai 3), l'énergie de soudage requise pour obtenir un transfert de métal exempt de micro court-circuit est située à 34.4 V pour 276 A. La constriction de l'arc augmente la densité d'énergie au centre de l'arc et donc fluidifie à l'excès la veine liquide tournante qui vient créer des courts-circuits parasites.

De manière encore plus notable, à 40 % d'hélium (essai 4), l'énergie de soudage requise pour obtenir un transfert de métal exempt de micro court-circuit est située à 34.4 V pour 273 A. La constriction de l'arc augmente la densité d'énergie au centre de l'arc et donc fluidifie à l'excès la veine liquide tournante qui vient créer des courts-circuits. En outre, la plus grande densité de courant augmente l'amplitude des forces électromagnétiques et donc augmente l'instabilité du transfert de métal qui va beaucoup modifier la géométrie de l'arc pendant le soudage. Ce phénomène se traduit par des oscillations transversales du cordon.

Au final, la teneur en hélium doit impérativement être maintenue de l'ordre de 20% en volume lors du soudage d'un assemblage chevauchant de pièces en acier carbone.

Des essais complémentaires autour de cette valeur de 20% en He ont permis de constater que les résultats sont particulièrement bons dans une plage très étroite, à savoir pour des teneurs en He entre 19,5 et 20,5% d'hélium, lorsque la teneur en oxygène est par ailleurs de l'ordre de 3% en volume, typiquement entre 2,7 et 3,3% en volume.

De façon préférée, la teneur en He est d'au moins 19,7%, préférentiellement d'au moins 19,8%, encore plus préférentiellement d'au moins 19,9%, et/ou d'au plus 20,3%, de préférence d'au plus 20,2%, encore plus préférentiellement d'au plus 20,1%.

De même, avantageusement, la teneur en oxygène est typiquement d'au moins 2,8%, préférentiellement d'au moins 2,9%, et/ou d'au plus 3,2%, de préférence d'au plus 3,1%.

L'ensemble de ces essais permet d'aboutir à une composition gazeuse ternaire Ar/He/O₂ spécifique et particulièrement bien adaptée au soudage MIG/MAG avec arc rotatif, de pièces en acier carbone en configuration se chevauchant ou en angle de type gouttière, en particulier d'assemblages de type à bords soyés, à savoir un mélange gazeux ternaire Ar, He et O₂ constitué de 20% d'hélium, de 3% d'oxygène et d'argon pour le reste (% en volume).

En effet, un mélange gazeux selon cette composition permet d'obtenir un transfert par veine liquide tournante stable à faible énergie, sans projection et présentant la morphologie de cordon attendue, en particulier un excellent mouillage.

En effet, l'emploi de mélanges ternaires où la teneur en hélium se situe autour de 20% permet d'abaisser le niveau d'énergie auquel le transfert VLT est obtenu de façon stable puisqu'il permet d'augmenter la densité de courant sans pour autant atteindre un niveau qui provoquerait l'allongement de la veine liquide (effet de pincement magnétique et isothermes plus élevées) et donc créerait des micro-courts-circuits.

Limiter la teneur en oxygène à 3 % de ces mélanges ternaires permet de limiter l'effet tensio-actif du gaz donc permet aussi de ne pas avoir de micro-courts-circuits et permet de ne pas avoir de détachement de l'extrémité de la veine liquide tournante pendant la rotation. En effet, ces projections centrifuges qui apparaissent pour des taux en O₂ > 4.5%, tombent hors du bain de soudage et provoquent des projections adhérentes importantes.

En outre, employer un taux supérieur à 5% conduit à un aspect de cordon qui peut être considéré comme insuffisant pour des raisons d'oxydation de surface et de présence de silicates.

Le procédé de soudage MIG/MAG à l'arc électrique avec fil d'apport et protection gazeuse Ar/He/O2 selon l'invention est particulièrement adapté au soudage de pièces en acier carbone, notamment lorsqu'une oxydation de surface du cordon peut être tolérée.

Le procédé de soudage MIG/MAG selon l'invention est bien adapté au soudage des assemblages en bords soyés, notamment les ballons de chauffe-eau, les corps d'extincteurs, les cuves...

## Revendications

1. Procédé de soudage à l'arc électrique de type MIG/MAG d'au moins une pièce en acier au carbone avec mise en oeuvre d'un fil d'apport fusible, d'un arc rotatif et d'une protection gazeuse formée d'un mélange gazeux ternaire constitué d'hélium, d'oxygène et d'argon, dans lequel le fil d'apport fusible est fondu par l'arc rotatif de manière à obtenir un transfert de métal par veine liquide tournante et la ou les pièces soudées se chevauchant ou se recouvrant l'une l'autre, le sondage à l'arc rotatif ayant lieu au niveau dudit chevauchement ou recouvrement, **caractérisé en ce que** le mélange gazeux ternaire est constitué de 19,5 à 20,5 % d'hélium, de 2,7 à 3,3 % d'O₂ et d'argon pour le reste (% en volume).

2. Procédé selon la revendication précédente, **caractérisé en ce que** la protection gazeuse est formée d'un mélange gazeux ternaire contenant de 19,8 à 20,2 % d'hélium.

3. Procédé selon l'une des revendications précédentes, **caractérisé en ce que** la protection gazeuse est formée d'un mélange gazeux ternaire contenant de 2,8 à 3,2 % d'O₂.

4. Procédé selon l'une des revendications précédentes, **caractérisé en ce que** la protection gazeuse est formée d'un mélange gazeux ternaire contenant de 2,9 à 3,1 % d'O₂.

5. Procédé selon l'une des revendications précédentes, **caractérisé en ce que** la protection gazeuse est formée d'un mélange gazeux ternaire constitué de 20 % d'hélium, 3 % d'O₂ et d'argon pour le reste.

6. Procédé selon l'une des revendications précédentes, **caractérisé en ce que** les pièces soudées sont en configuration de type à bords soyés.

7. Procédé selon l'une des revendications précédentes, **caractérisé en ce que** les pièces soudées sont des éléments constitutifs d'un appareil sous pression de type ballon d'eau chaude, extincteur, compresseur, appareil réfrigérant ou bouteille de gaz.

8. Procédé selon l'une des revendications précédentes, **caractérisé en ce que** les pièces soudées comprennent des extrémités cylindriques se chevauchant l'une l'autre,

9. Procédé selon l'une des revendications précédentes, **caractérisé en ce qu'**on met en oeuvre une tension d'arc comprise entre 29.5V et 35 V, de préférence moins de 34V.

10. Procédé selon l'une des revendications précédentes, **caractérisé en ce qu'**on soude une ou des pièces ayant une épaisseur inférieure ou égale à 3 mm, de préférence inférieure ou légale à 2 mm.

11. Procédé selon l'une des revendications précédentes, **caractérisé en ce que** le fil a un diamètre de 0.8 à 1 mm.

## Patentansprüche

1. Verfahren zum Lichtbogenchweißen vom Typ MIG/MAG von mindestens einem Teil aus Kohlenstoffstahl unter Einsatz eines schmelzbaren Schweißdrahtes, eines rotierenden Lichtbogens und eines gasförmigen Schutzes, der von einem ternären Gasgemisch gebildet wird, welches aus Helium, Sauerstoff und Argon besteht, wobei der schmelzbare Schweißdraht durch den rotierenden Lichtbogen so geschmolzen wird, dass eine Metallübertragung durch drehenden Flüssigkeitsstrahl erhalten wird und das oder die geschweißten Teile sich überlappen oder einander überdecken, wobei das Schweißen mit dem rotierenden Lichtbogen auf Ebene der Überlappung oder Überdeckung stattfindet, **dadurch gekennzeichnet, dass** das ternäre Gasgemisch (in Volumen-%) aus 19,5 bis 20,5 % Helium, aus 2,7 bis 3,3 % O₂ und für den Rest aus Argon besteht.

2. Verfahren nach dem vorstehenden Anspruch, **dadurch gekennzeichnet, dass** der gasförmige Schutz von einem ternären Gasgemisch gebildet wird, das 19,8 bis 20,2 % Helium enthält.

3. Verfahren nach einem der vorstehenden Ansprüche, **dadurch gekennzeichnet, dass** der gasförmige Schutz von einem ternären Gasgemisch gebildet wird, das 2,8 bis 3,2 % O₂ enthält.

4. Verfahren nach einem der vorstehenden Ansprüche, **dadurch gekennzeichnet, dass** der gasförmige Schutz von einem ternären Gasgemisch gebildet wird, das 2,9 bis 3,1 % O₂ enthält.

5. Verfahren nach einem der vorstehenden Ansprüche, **dadurch gekennzeichnet, dass** der gasförmige Schutz von einem ternären Gasgemisch gebildet wird, das aus 20% Helium, 3 % O₂ und für den Rest aus Argon besteht.

6. Verfahren nach einem der vorstehenden Ansprüche, **dadurch gekennzeichnet, dass** die geschweißten Teile eine Konfiguration mit durchgezogenen Kanten aufweisen.

7. Verfahren nach einem der vorstehenden Ansprüche, **dadurch gekennzeichnet, dass** die geschweißten Teile Bestandteile einer unter Druck stehenden Vorrichtung vom Typ Warmwasserboiler, Feuerlöscher, Kompressor, Kühlvorrichtung oder Gasflasche sind.

8. Verfahren nach einem der vorstehenden Ansprüche, **dadurch gekennzeichnet, dass** die geschweißten Teile zylindrische Enden umfassen, die einander überlappen.

9. Verfahren nach einem der vorstehenden Ansprüche, **dadurch gekennzeichnet, dass** eine Lichtbogenspannung im Bereich zwischen 29,5 V und 35 V, vorzugsweise weniger als 34 V eingesetzt wird.

10. Verfahren nach einem der vorstehenden Ansprüche, **dadurch gekennzeichnet, dass** ein oder mehrere Teile geschweißt werden, die eine Dicke von kleiner oder gleich 3 mm, vorzugsweise kleiner oder gleich 2 mm aufweisen.

11. Verfahren nach einem der vorstehenden Ansprüche, **dadurch gekennzeichnet, dass** der Draht einen Durchmesser von 0,8 bis 1 mm aufweist.

## Claims

1. Method for electric arc welding of the MIG/MAG type of at least one part made from carbon steel with the use of a fusible filler wire, a rotary arc and gaseous protection formed by a ternary gaseous mixture consisting of helium, oxygen and argon, in which the fusible filler wire is melted by the rotary arc so as to obtain a transfer of metal by rotating liquid stream and the welded part or parts straddle or overlap one another, the welding by rotary arc taking place at said straddle or overlap, **characterised in that** the ternary gaseous mixture consists of 19.5% to 20.5% helium, 2.7% to 3.3% O₂ and argon for the remainder (% by volume).

2. Method according to the preceding claim, **characterised in that** the gaseous protection is formed by a ternary gaseous mixture containing 19.8% to 20.2% helium.

3. Method according to any one of the preceding claims, **characterised in that** the gaseous protection is formed by a ternary gaseous mixture containing 2.8% to 3.2% O₂.

4. Method according to any one of the preceding claims, **characterised in that** the gaseous protection is formed by a ternary gaseous mixture containing 2.9% to 3.1% O₂.

5. Method according to any one of the preceding claims, **characterised in that** the gaseous protection is formed by a ternary gaseous mixture consisting of 20% helium, 3% O₂ and argon for the remainder.

6. Method according to any one of the preceding claims, **characterised in that** the welded parts are in a configuration of the burred edge type.

7. Method according to any one of the preceding claims, **characterised in that** the welded parts are elements constituting a pressurised apparatus of the hot-water vessel, fire extinguisher, compressor, refrigerating apparatus or gas cylinder type.

8. Method according to any one of the preceding claims, **characterised in that** the welded parts comprise cylindrical ends overlapping one another.

9. Method according to any one of the preceding claims, **characterised in that** an arc voltage of between 29.5 V and 35 V, preferably less than 34 V, is used.

10. Method according to any one of the preceding claims, **characterised in that** one or more parts having a thickness of less than or equal to 3mm, preferably less than or equal to 2mm, are welded.

11. Method according to any one of the preceding claims, **characterised in that** the wire has a diameter of 0.8 to 1mm.
